(19) Europäisches Patentamt / European Patent Office / Office européen des brevets

(11) **EP 4 094 341 B1**

(12) **EUROPEAN PATENT SPECIFICATION**

(45) Date of publication and mention
of the grant of the patent:
**06.03.2024 Bulletin 2024/10**

(21) Application number: **21702117.9**

(22) Date of filing: **21.01.2021**

(51) International Patent Classification (IPC):
*H02J 7/00* (2006.01)    *B60L 58/21* (2019.01)
*H01M 10/42* (2006.01)    *H01M 10/44* (2006.01)

(52) Cooperative Patent Classification (CPC):
**H02J 7/0014; B60L 58/21; H01M 10/425;**
**H01M 10/441; H02J 7/0025; H02J 7/0063;**
B60L 2240/547; B60L 2240/549; H01M 2010/4271;
H01M 2220/20; Y02E 60/10; Y02T 10/70

(86) International application number:
**PCT/NL2021/050036**

(87) International publication number:
**WO 2021/150110 (29.07.2021 Gazette 2021/30)**

(54) **BATTERY SYSTEM AND BATTERY MANAGEMENT METHOD**

BATTERIESYSTEM UND BATTERIEVERWALTUNGSVERFAHREN

SYSTÈME DE BATTERIE ET PROCÉDÉ DE GESTION DE BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.01.2020 NL 2024712**

(43) Date of publication of application:
**30.11.2022 Bulletin 2022/48**

(73) Proprietor: **Ola Electric Mobility B.V.
1062 EA Amsterdam (NL)**

(72) Inventors:
• **THENGODKAR, Prasanna
1062 DJ Amsterdam (NL)**

• **KOUDIJS, Joris
2026 XX Haarlem (NL)**
• **JACOBSZ ROSIER, Bart
1053 LH Amsterdam (NL)**

(74) Representative: **Arnold & Siedsma
Bezuidenhoutseweg 57
2594 AC The Hague (NL)**

(56) References cited:
**EP-A1- 2 980 954       EP-A1- 3 447 878
EP-A2- 3 309 920       WO-A2-2009/111478
CN-A- 107 769 280      JP-B2- 4 987 581
US-A1- 2013 181 681    US-A1- 2014 117 756**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a battery system comprising a plurality of coupled battery packs and an associated battery management method, a data storage comprising instructions to perform the associated battery management method and a computer program to perform the associated battery management method, in particular for battery systems comprising a plurality of individual battery packs.

Battery packs are sets of battery cells electrically connected together. Combined together, a plurality of individual battery packs can form battery systems used for a large variety of applications, such as electric vehicles (mobility), but also (temporary) stationary storage, cordless power tools, consumer electronics, etcetera. Typically an electric vehicle may be a car or a two-wheeled vehicle such as a motor scooter, hereafter also named scooter, or motorcycle. Alternatively, the vehicle may also be a trike or a quad. Typically a temporary stationary storage may be an off-grid electric energy storage solution for renewable energies or servers. These applications have further in common that one or more battery packs may be hot-swapped by a user during operation, bringing up the problematic of the connection of multiple battery packs having potentially different charging states, temperatures, use history among others.

Conventional multi-packs battery systems either apply coupling of the battery packs in series or in parallel. When the battery packs are connected in series the total voltage is increased with each additional battery pack. When the battery packs are connected in parallel, the voltage level is maintained at the voltage level of a single battery pack.

A connection in series requires a wide operating voltage range of load or a means of transforming the voltage to a more constant level. Both increase complexity and are often impractical.

A connection in parallel does not have this problem. However to initially couple multiple packs in parallel, the packs are required to be of very close voltage. If this is not the case, a current would flow from one pack to the other with the risks of overcurrent and overheating. To prevent this, the following two known prevention methods have been applied in the prior art alone or in combination. The first known prevention method is active balancing, wherein a controlled current is allowed to flow from one battery pack to another battery pack to mitigate a voltage difference between both battery packs. This causes conversion losses and requires time to happen. The second known prevention method is to only discharge the highest voltage battery pack until the voltage of the first lower voltage battery pack is reached. The battery packs are only coupled once the voltage difference is within a limited predetermined value. This second prevention method also requires a lot of time before battery packs can truly be coupled together. Yet these prior art solutions fail to address the issue of efficiently hot-swapping battery packs in or out of a battery system.

Moreover, conventional single pack battery systems commonly operate with an allowable system load that is predetermined and static. For battery systems with multiple battery packs, the allowable system load, i.e. the allowable total system current and power is however more difficult to derive. Indeed, the current and power that any battery pack of the plurality of connected battery packs can deliver at a given moment, can change with its state, e.g. temperature, state of charge, use history, etc. When combining multiple battery packs to form a battery system, some of these battery packs may thus be able to provide more current and power than other battery packs due to their state. Furthermore, battery packs that are connected in series or in parallel may not share current equally, due to impedance differences between the individual battery packs and their electrical connections. In combination, these effects result in a combined allowable system current and power which is not equal to the simple sum of the individual battery packs, and changes with the individual states of each of the battery packs of the battery system. Some examples of the relevant prior art are shown in the the following documents: WO2009111478, CN107769280, JP4987581 and US2013181681.

## SUMMARY

An objective of the present invention is to provide a battery system, and a battery management method for a battery system that are improved relative to the prior art and wherein at least one of the above stated problems is obviated or alleviated.

The present invention is defined by the independent apparatus claim 1.

Embodiments are based inter alia on the inventive insight that at any time the connection architecture of one or more battery packs in parallel is dynamically adjusted to the set of battery packs and their conditions. In this way the battery management is rendered more resilient and flexible, as it becomes able to cope with swaps, and even hot-swaps, of individual packs without sacrificing security nor operability.

According to a preferred embodiment, a unidirectional switching element comprises a series combination of an actively controllable switch and a unidirectional passively controlled switch. In this way, the function of a unidirectional switching element may be obtained by combining two simple, commercially available elements, one forcing a direction of current flow, the other one being controllably on or off. Preferably the unidirectional passively controlled switch is a diode, more preferably an ideal diode. In this way, the unidirectionality of flow of the current in the combined unidirectional switching element is insured. The controllable switch may be bidirectional or unidirectional, in which case it should be oriented in the same way as the unidirectional passively controlled switch.

A a pair of anti-parallel unidirectional switching elements comprises, connected in anti-parallel, a discharging switching element oriented such as to allow the discharge of the associated battery pack and a charging switching element oriented such as to allow the charge of the associated battery pack. In this way, a charging path or a discharging path to a battery pack may be independently controlled. In particular independent control for each direction of power transfer enables to block any undesired cross-balancing between battery packs.

According to a preferred embodiment, the controller is configured in a first mode of operation to turn on all the discharging switching elements, turn on the charging switching element of the battery pack having the highest voltage and turn off all the other charging switching elements. During this mode of operation, discharging is emphasized, regenerative energy can still be absorbed and safety is insured. It is noted that, in a counter intuitive manner, the battery that is recharged is the battery that needs in theory least recharging. Yet that operation insures that balancing currents from the high voltage battery pack to battery packs with lower voltages are prevented during any intermittent regeneration phase. In this way, operability and safety are prioritized over energy management.

According to a preferred embodiment, the controller is configured in a second mode of operation to turn on all the charging switching elements, turn on the discharging switching element of the battery pack having the lowest voltage and turn off all the other discharging switching elements. During this mode of operation, charging is emphasized, discharging energy can still be delivered and safety is insured. It is noted that, in a counter intuitive manner, the battery that is discharged is the battery that is the least charged. Yet, that operation insures that balancing currents from that battery pack to battery packs with higher voltages are prevented during any intermittent discharging phase. In this way, operability and safety are prioritized over energy management.

According to a preferred embodiment, the controller is configured in a third mode of operation to, if voltage and current differences between battery packs fall within a predetermined range, turn on all charging and discharging switching elements. In this mode, balancing between cells is allowed to happen in small proportions. Alternatively, if voltage and current differences between battery packs fall outside of a predetermined range, the controller is configured in a fourth mode of operation to dynamically switch between the first and second mode of operation. Preferably before switching from one mode to the other, all switching elements are first turned off and a disconnected idle state for each battery pack is confirmed. In this way, more flexibility is achieved to cope with varying demands from the load and varying conditions of battery packs.

According to a further developed embodiment, the controller is configured to operate according to two or more modes of operations, including at least the first mode of operation for optimal discharge of all the battery packs to the external load, the second mode for optimal charge of all battery packs from the external load, the third mode for optimal bidirectional transfer between the battery packs and the external load. In this way, the battery system may cope with frequent (hot-)swapping of battery packs and a varying external load by dynamically switching between modes of operation. It is noted that the external load may be an actual load consuming energy and/or a source generating energy. For instance the external load may be a motor with a traction phase during which the load consumes energy, said motor having also a regeneration phase during which the load provides energy for recharging the battery system. Alternatively the external load may be a pure impedance, for a hand tool for instance, or an ideal source for a charging station.

According to a preferred embodiment, the battery management controller is configured to dynamically control the switching elements based on one or more than one parameter of the battery system and one or more than one parameter of the external load. Preferably, the one or more than one parameter of the battery system comprises one or more than one parameter for the battery packs, including any one or more of the following: a measured voltage across a battery pack, a measured current flowing through a battery pack, a derived State of Charge (SoC) of a battery pack, an estimated Open Circuit Voltage (OCV), a maximum allowable current (Imax) of a battery pack. Other well-known parameters for describing the energy state of a battery pack may yet be envisaged as well. Preferably, the one or more than one parameter of the external load includes any one or more of the following: a load current request for an electric load, a torque request for a motor, a speed request for a vehicle. Other well-known parameters for describing a use state of the load may yet be envisaged as well.

The battery management controller is configured to dynamically calculate a maximum allowable current of the battery system based on an estimated impedance for each battery pack, a maximum allowable current for each battery pack, and an estimated open circuit voltage for each battery pack. In this way, the battery system may communicate this important variable to a load management system, to dynamically limit the output request of the load to what the battery system may deliver. This dynamic global Management of the load and the battery system improves the lifetime of the battery. Preferably, the battery management controller is configured to dynamically calculate a maximum allowable current of the battery system using the formula below:

$$I_{\max total}(t) = sum \begin{cases} (OCV_1(t) - U_{min}(t)) * Z_1(t) \\ (\vdots \ - \ \vdots) \ * \ \vdots \\ (OCV_n(t) - U_{min}(t)) * Z_n(t) \end{cases}$$

$$\text{with} \quad U_{min}(t) = max \begin{cases} OCV_1(t) - Z_1(t) * I_{1,max}(t) \\ \vdots \quad - \vdots \quad * \quad \vdots \\ OCV_n(t) - Z_n(t) * I_{n,max}(t) \end{cases}$$

wherein $OCV_i$ is the Open Circuit Voltage of a battery pack i, $Z_i$ is the impedance of a battery pack i, $I_{i,max}$ is the maximum allowable current of a battery pack i, for i=1 to n, with n the total number of battery packs. The battery management controller is configured to dynamically control the unidirectional switching elements based on the calculated maximum allowable current of the battery system.

According to a preferred embodiment, the battery system is configured in use to accommodate the hot-swap of at least one battery pack. By hot-swap is meant the introduction or removal of a battery pack during operation of the battery system. Besides a new battery pack may have any conditions, state of charge, temperature, history. The battery system with its versatile connection architecture is able to cope with one or more hot-swaps and various battery packs in any state.

According to a preferred embodiment, a vehicle is provided, comprising a battery system according to any of the above preferred embodiments. Preferably the vehicle is one of a car, a motor scooter, a motorcycle, a trike or a quad. Alternatively, a cordless hand tool, a stationary storage may be provided with a battery system according to any of the above preferred embodiments, these alternatives are not covered by the appended claims.

In this way, several use scenarios may be envisaged, for instance a vehicle with traction and regeneration phases.

The present invention is further defined by the independent method claim 11.

In this way, despite varying conditions of the battery packs, a maximum allowable current for the total system is calculated repeatedly every control cycle to update the global status of the battery system. This information is beneficial for any load control in order to improve the battery management.

According to a preferred embodiment, the method comprises calculating the lowest voltage of the battery system at which the most restricting battery pack reaches its maximum allowable current.

According to a preferred embodiment, the method further comprises the step of calculating the maximum allowable current of the battery system using the formula below:

$$I_{max\,total}(t) = sum \begin{cases} (OCV_1(t) - U_{min}(t)) * Z_1(t) \\ (\vdots \quad - \quad \vdots) \quad * \quad \vdots \\ (OCV_n(t) - U_{min}(t)) * Z_n(t) \end{cases}$$

$$\text{with} \quad U_{min}(t) = max \begin{cases} OCV_1(t) - Z_1(t) * I_{1,max}(t) \\ \vdots \quad - \vdots \quad * \quad \vdots \\ OCV_n(t) - Z_n(t) * I_{n,max}(t) \end{cases}$$

wherein $OCV_i$ is the Open Circuit Voltage of a battery pack i, $Z_i$ is the impedance of a battery pack i, $I_{i,max}$ is the maximum allowable current of a battery pack i, for i=1 to n, with n the total number of battery packs.

According to the invention there is provided a data storage device encoding a program in machine-readable and machine-executable form to perform one or more steps of any one of the embodiments of the method disclosed above.

According to the invention, there is provided a computer program comprising computer-executable instructions to perform the method, when the program is run on a computer, according to any one of the steps of any one of the embodiments disclosed above.

## BRIEF DESCRIPTION OF THE FIGURES

In the following description preferred embodiments of the present invention are further elucidated with reference to the drawings, in which:

Figure 1 is an overview of a battery system comprising three battery packs;
Figure 2a is a detailed schematic view showing a charging state;
Figure 2b is a detailed schematic view showing a discharging state;
Figure 2c is a detailed schematic view showing a bi-directional state; and
Figure 2d is a detailed schematic view showing an idle state.

**DESCRIPTION OF EMBODIMENTS**

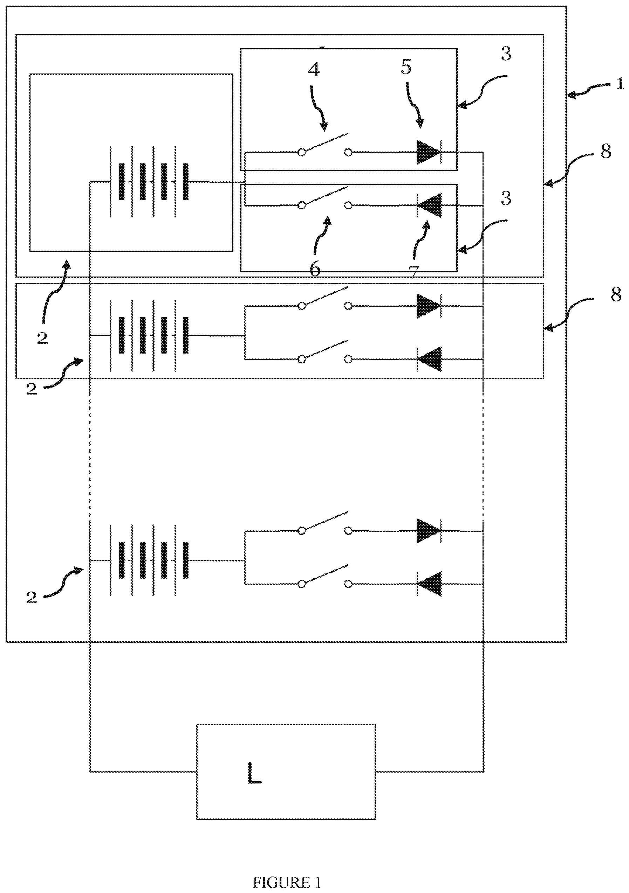

In the battery system 1, multiple battery packs 2 may be connected in parallel branches 8. The battery system 1 may further be connected in parallel to an external load L to exchange electrical energy with the external load L. A battery pack 2 may comprise a plurality of battery cells electrically connected together, preferably in series. To allow power to flow both to and from each battery pack 2, every branch 8 may be equipped with two diodes 5, 7. One diode 5 of the two diodes 5, 7 may be directed to allow charging of the associated battery pack 2, and the other diode 7 of the two diodes 5, 7 may be directed to allow discharging of the associated battery pack 2. The diodes are by definition passively controlled switches, whose conduction depends on the voltage drop across them. Each individual charging or discharging path in a branch 8 may further be enabled or disabled by an associated controllable switch 4, 6 that is connected in series to the respective diode 5, 7. The switches 4, 6 are actively controllable switches that receive respective switching orders from a controller (not represented). The controller may be formed as a separate element and located in the vicinity of the battery packs, or delocalised, and/or combined with further control means dedicated to the load. The diodes 5, 7 and switches 4, 6 may either be connected to the low side (anode) or the high side (cathode) of battery packs 2. Each combination of a controllable switch 4,6 and a series diode 5, 7 acts as an unidirectional switching element 3 that may be actively controlled via the controller. Due to the orientation of the diodes in opposite directions, the combination of the switches 4,6 and the diodes 5,7 forms as a pair of unidirectional switching elements 3 connected in anti-parallel to each other. By anti-parallel is meant that the unidirectional switching elements 3 are connected in parallel with each other and that they are oriented in opposite directions. The unidirectional switching elements 3 may further be called, based on their orientation, charging switching elements because oriented to allow charging of the associated battery pack or discharging switching elements because oriented to allow discharging of the associated battery pack. In Figure 1 the combination of a switch 4 and a diode 5 forms a so-called charging switching element oriented to allow the charge (when turned on) and block the discharge of the associated battery pack. Similarly, the combination of a switch 6 and a diode 7 forms a so-called discharging switching element oriented to allow the discharge (when turned on) and block the charge of the associated battery pack. The switches 4, 6 may be of a solid-state type or mechanical type, but are not limited thereto. If an alternative switch is already present for other battery protection functions, this particular alternative switch may also be used to function as a switch 4, 6. Consequently, every battery pack 2 of battery 1 may be set in at least three states: charging, discharging, and bi-directional transfer of power.

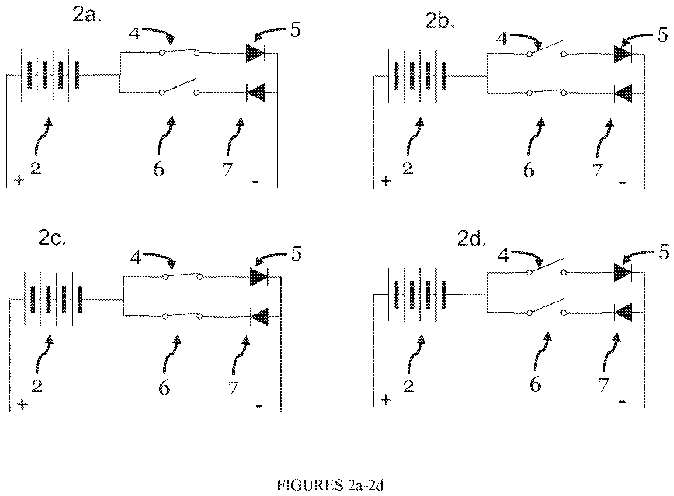

In the charging state shown in Figure 2a, the switch 4 is closed to allow charging current to flow through diode 5. Switch 6 is kept open to prevent discharging current to flow through diode 7.

In the discharging state shown in Figure 2b, the switch 6 is closed to allow discharging current to flow through diode 7. Switch 4 is kept open to prevent charging current to flow through diode 5.

In the bi-directional state shown in Figure 2c, both switches 4 and 6 are closed to allow charging current to flow through diode 5 and discharging current to flow though diode 7.

In a further preferred embodiment, an "idle state" may be identified as a fourth state. In this idle state, that is shown in Figure 2d, both switches 4 and 6 are kept open to prevent any charging current or discharging current to flow.

The controller may be configured to control the switches depending on at least one parameter of the external load L and at least one parameter of the battery system. Typically to meet security constraints and efficiency constraints, in case of a single battery pack the controller may be configured to dynamically limit the load requested by the external load L, i.e. the vehicle, not to exceed the maximum allowable load of the single battery pack.

In a more complex battery system with a plurality of battery packs, estimating the maximum allowable system current is a bigger challenge. In particular, applications where battery packs may be hot swapped provide the challenge of combining battery packs with different states of charge, temperatures, and use histories among others. This happens particularly for small vehicle applications (scooter, 3 wheelers) where the mere size of a battery pack makes it possible and necessary for a user to manually remove and replace battery packs in the battery system. For instance, a delivery person using an electric scooter provided with multiple battery packs may in between deliveries swap battery packs to improve his autonomy range.

The flexible switching architecture of Figure 1 enables to deal with such a situation. Additionally or alternatively according to another aspect of the invention, a method for estimating this important variable will now be described for also solving the above identified challenge of battery systems with multiple battery packs.

The maximum allowable system current $I_{max\ total}$ of the battery system 1 at any point in time is indeed determined in dependence on the following temporal information for each individual battery pack 2 of the battery 1:

- the impedance of a battery pack 2 ($Z(t)$), which is usually a product of the State of Charge, State of Health and temperature;
- the Open Circuit Voltage ($OCV(t)$) of a battery pack 2, which is defined as the voltage of the battery pack 2 if no current is drawn for some time; and
- the maximum allowable current ($I_{max}$) of a battery pack 2, which may be constrained for reasons like safety, lifetime, warranty, etc.

Based on this data, the lowest battery voltage $U_{min}$ of battery system 1, at which the most restricting battery pack 2 reaches its maximum allowable current ($I_{max}$) is calculated using the formula below, wherein "n" is the number of battery packs 2 that are assembled to define the battery system 1:

$$U_{min}(t) = max \begin{cases} OCV_1(t) - Z_1(t) * I_{1,max}(t) \\ \vdots \quad - \vdots \quad * \quad \vdots \\ OCV_n(t) - Z_n(t) * I_{n,max}(t) \end{cases}$$

The resulting lowest battery system voltage $U_{min}$ of battery system 1 may then be used to calculate the maximum allowable current ($I_{max\ total}$) of the battery system 1 using the formula below:

$$I_{max\,total}(t) = sum \begin{cases} (OCV_1(t) - U_{min}(t)) * Z_1(t) \\ (\vdots \quad - \quad \vdots) \quad * \quad \vdots \\ (OCV_n(t) - U_{min}(t)) * Z_n(t) \end{cases}$$

The maximum allowable battery power $P_{battery}$ of battery system 1 may be the product of the lowest battery voltage $U_{min}$ of battery system 1 and the maximum allowable current ($I_{max\ total}$) of battery system 1, defined by the formula:

$$P_{battery}(t) = U_{min}(t) * I_{max\,total}(t)$$

Thus, for a battery 1 that is an assembly of three battery packs, the following formulas may be used:

$$U_{min}(t) = max \begin{cases} OCV_1(t) - Z_1(t) * I_{1,max}(t) \\ OCV_2(t) - Z_2(t) * I_{2,max}(t) \\ OCV_3(t) - Z_3(t) * I_{3,max}(t) \end{cases}$$

$$I_{max\,total}(t) = sum \begin{cases} (OCV_1(t) - U_{min}(t)) * Z_1(t) \\ (OCV_2(t) - U_{min}(t)) * Z_2(t) \\ (OCV_3(t) - U_{min}(t)) * Z_3(t) \end{cases}$$

A battery management system, "BMS", also referred in the application as battery management controller, may be configured to determine and/or calculate at every control cycle the abovementioned parameters OCV, Z, $I_{max}$, $U_{min}$, $I_{max\ total}$ and $P_{battery}$. These parameters may be derived and/or measured according to known methods in the art based on sensors and/or digital processing means.

Such a battery management system or controller may be arranged inside the battery system 1, in particular in one or more than one of the battery packs 2. One or more than one of the battery packs 2 may serve as a "master" battery pack 2 and comprise a BMS/controller that is also associated with one or more that one "slave" battery packs 2.

Alternatively, the battery management system or controller may be arranged externally from the battery system 1 and may for example be a controller of an electric external load device, in particular of a vehicle. Although the controller may be a dedicated controller, it may alternatively be integrated in a electronic control unit, "ECU", of the vehicle.

The maximum allowable battery current ($I_{max\ total}$) and/or the maximum allowable battery power $P_{battery}$ of battery 1, as determined by the BMS may be used to dynamically limit the load requested by the external load, not to exceed the maximum allowable load of the battery system 1.

The dynamic determination of the maximum allowable battery current ($I_{max\ total}$) and/or the maximum allowable battery power $P_{battery}$ of battery 1 allows optimal use of a battery system 1 that is an assembly of multiple battery packs 2. Any differences in state and history of the individual battery packs 2 is effectively recognized and taken into account.

It is noted that with the use of conventional diodes comes a voltage loss. This generates heat and negatively affects system performance. To overcome this, an "ideal" diode may be implemented. An "ideal diode" is a dedicated circuitry configured to mimic a conventional diode without significant losses in high power applications.

The load requested by the external load may thus be limited according to the above described method. Additionally, the different battery packs 2 may be combined via their switching elements by the controller to suit different needs. In case of an electric vehicle, full discharging may be desired during an active traction state, while allowing some regeneration during regenerative breaking, while full charging may be desired during a recharging operation while the vehicle is connected to a charging station. The following modes of operation may then be selected by the controller to meet the load needs:

During a first mode of operation, to provide maximum discharging power, all battery packs 2 may be configured to allow discharging current. Some regeneration may happen during that mode of operation, e.g. during regenerative braking of a vehicle. Yet to avoid any uncontrolled cross, balancing, current between battery packs, only the highest voltage battery pack may be configured to allow current flow in both directions by applying the bi-directional state shown in Figure 2c to that specific battery pack. If this mode of operation is maintained, once the voltage of the highest voltage battery pack reaches the level of next highest voltage battery pack, two battery packs may discharge in parallel, and so on.

During a second mode of operation, to provide maximum charging power, all battery packs 2 may be configured to allow charging current. Temporarily discharging may be possible for the lowest voltage battery pack 2, configured then to allow current flow in both directions by applying the bi-directional state shown in Figure 2c. This mode of operation mimics the first mode of operation but for charging. It allows maximum charging, some discharging and prevents uncontrolled balancing currents in between battery packs.

During a third mode of operation and to allow more current flow in both directions, multiple battery packs 2 may be set to the bi-directional state shown in Figure 2c. To make sure no or minimal current flows from one battery pack 2 to another battery pack 2, the voltage of each battery pack 2 and/or the current provided by each battery pack 2 under load may be checked before setting more than one battery pack 2 to the bi-directional state shown in Figure 2c. If voltage and current differences fall within a pre-defined range a battery pack 2 is allowed to enter the bi-directional state. In this mode, balancing is thus allowed since conditions have been met to allow it safely, namely it was checked that the battery packs are more or less charged in similar manner.

During a fourth mode of operation, to allow maximum charging power and discharging power without the voltage and current conditions of the third mode of operation being fulfilled, the controller may be configured to dynamically switch between the charging state of the second mode of operation (shown in Figure 2a) and the discharging state (shown in Figure 2b) of the first mode of operation, on each battery pack 2 individually based on demand. To avoid a high cross current between battery packs having different charging conditions to occur the following measures can be taken into account:

a. before switching to the new state all battery packs 2 shall first go to a disconnected state (idle state shown in Figure 2d);
b. after confirming all battery packs 2 have successfully reached the idle state they shall all go into the new state; and
c. these conditions shall preferably be followed for both transitions from charging state to discharging state and vice versa.

A person skilled in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is understood that this description is merely made by way of example and not as a limitation of the scope of protection which is determined by the appended claims.

## Claims

1. A battery system (1) for connection to an external load (L) comprising:

   - a plurality of battery packs (2)
   - a plurality of unidirectional switching elements (3), and
   - a battery management controller,
   - the battery system comprising a plurality of branches (8) connected in parallel to each other, each branch (8) comprising a battery pack (2) connected in series with a pair of unidirectional switching elements (3) connected in anti-parallel, **characterized in that** the battery management controller is configured to dynamically calculate a maximum allowable current of the battery system based on an estimated impedance for each battery pack, a maximum allowable current for each battery pack, and an estimated open circuit voltage for each battery pack, and

   the battery management controller is configured to dynamically control the unidirectional switching elements based on the calculated maximum allowable current of the battery system.

2. The battery system of claim 1, wherein the unidirectional switching element (3) comprises a series combination of an actively controllable switch (4, 6) and a unidirectional passively controlled switch (5, 7).

3. The battery system of the previous claim, wherein the unidirectional passively controlled switch (5,7) is a diode, more preferably an ideal diode.

4. The battery system of any of the above claims, wherein the pair of anti-parallel unidirectional switching elements (3) comprises, connected in anti-parallel, a discharging switching element oriented to allow the discharge and block the charge of the associated battery pack and a charging switching element oriented to allow the charge and block the discharge of the associated battery pack.

5. The battery system of the previous claim 4,

   wherein the controller is configured in a first mode of operation to turn on all the discharging switching elements, turn on the charging switching element of the battery pack having the highest voltage and turn off all the other charging switching elements; and/or
   wherein the controller is configured in a second mode of operation to turn on all the charging switching elements, turn on the discharging switching element of the battery pack having the lowest voltage and turn off all the other discharging switching elements; and/or wherein the controller is configured in a third mode of operation to, if voltage and current differences between battery packs (2) fall within a predetermined range, turn on all charging and discharging switching elements.

6. The battery system of the previous claim 5, wherein the controller is configured in a fourth mode of operation to, if voltage and current differences between battery packs fall outside of a predetermined range, dynamically switch between the first and second mode of operation, wherein preferably before switching from one mode to the other, all switching elements are first turned off and a disconnected idle state for each battery pack is confirmed.

7. The battery system of claim 5 or claim 6, wherein the controller is configured to operate according to two or more of the following modes of operation : the first mode of operation for maximum discharge of all the battery packs to the external load, the second mode for maximum charge of all battery packs from the external load, and the third mode for maximum bidirectional transfer between the battery packs and the external load.

8. The battery system of any of the above claims, wherein the battery management controller is configured to dynamically control the switching elements based on one or more than one further parameter of the battery system and one or more than one parameter of the external load (L), wherein preferably the one or more than one further parameter of the battery system comprises one or more than one parameter for the battery packs, including any one or more of the following: a measured voltage across a battery pack, a measured current flowing through a battery pack, a derived State of Charge (SoC) of a battery pack, and/or wherein preferably the one or more than one parameter of the external load includes any one or more of the following: a load current request, a torque request, a speed request.

9. The battery system of any of the above claims, wherein the battery management controller is configured to dynamically calculate the maximum allowable current of the battery system using the formula below:

$$I_{\max total}(t) = sum \begin{cases} (OCV_1(t) - U_{min}(t)) * Z_1(t) \\ (\vdots - \vdots) * \vdots \\ (OCV_n(t) - U_{min}(t)) * Z_n(t) \end{cases}$$

$$\text{with } U_{min}(t) = max \begin{cases} OCV_1(t) - Z_1(t) * I_{1,max}(t) \\ \vdots - \vdots * \vdots \\ OCV_n(t) - Z_n(t) * I_{n,max}(t) \end{cases}$$

wherein $OCV_i$ is the estimated Open Circuit Voltage of a battery pack i, $Z_i$ is the estimated impedance of a battery pack i, $I_{i,max}$ is the maximum allowable current of a battery pack i, for i=1 to n, with n the total number of battery packs, wherein preferably the battery system is configured in use by using said formula to accommodate the hot-swap of at least one battery pack .

10. A vehicle, comprising a battery system according to any of the above claims, wherein preferably the vehicle is one of a car, a motor scooter, a motorcycle, a trike or a quad.

11. A battery management method for a battery system of a plurality of battery packs according to claim 1, wherein the method comprises the steps of:

- receiving an estimated impedance ($Z_i(t)$) for each battery pack, a maximum allowable current ($I_{i,max}$) for each battery pack, and an estimated open circuit voltage ($OCV_i(t)$) for each battery pack,
- dynamically calculating a maximum allowable current of the battery system ($I_{max total}(t)$) based on the received information, and
- managing the plurality of battery packs according to the calculated maximum allowable current of the battery system ($I_{max total}(t)$), wherein managing the plurality of battery packs comprises dynamically controlling the unidirectional switching elements based on the calculated maximum allowable current of the battery system.

12. A battery management method according to the previous claim, further comprising calculating the lowest voltage of the battery system at which the most restricting battery pack reaches its maximum allowable current ($U_{min}(t)$).

13. A battery management method according to any of the above method claims, further comprising the step of calculating the maximum allowable current of the battery system using the formula below:

$$I_{\max total}(t) = sum \begin{cases} (OCV_1(t) - U_{min}(t)) * Z_1(t) \\ (\vdots - \vdots) * \vdots \\ (OCV_n(t) - U_{min}(t)) * Z_n(t) \end{cases}$$

$$\text{with } U_{min}(t) = max \begin{cases} OCV_1(t) - Z_1(t) * I_{1,max}(t) \\ \vdots - \vdots * \vdots \\ OCV_n(t) - Z_n(t) * I_{n,max}(t) \end{cases}$$

wherein $OCV_i$ is the estimated Open Circuit Voltage of a battery pack i, $Z_i$ is the estimated impedance of a battery pack i, $I_{i,max}$ is the maximum allowable current of a battery pack i, for i=1 to n, with n the total number of battery packs.

14. A data storage device encoding a program in machine-readable and machine-executable form to perform one or more steps of any one of the method claims above.

15. A computer program comprising computer-executable instructions to perform a method, when the program is run on a computer, according to any one of the steps of any one of the above method claims.

**Patentansprüche**

1. Ein Batteriesystem (1) zum Anschluss an eine externe Last (L), aufweisend:

   - eine Mehrzahl an Batteriepacks (2)
   - eine Mehrzahl an unidirektionalen Schaltelementen (3), und
   - eine Batterie-Management-Steuerung,
   - wobei das Batteriesystem eine Mehrzahl an parallel zueinander geschalteter Zweige (8) aufweist, wobei jeder Zweig (8) einen Batteriepack (2) umfasst, der mit einem Paar unidirektionaler antiparallel geschalteter Schaltelemente (3) in Reihe geschaltet ist, **dadurch gekennzeichnet, dass** die Batterie-Management-Steuerung so ausgebildet ist, dass sie auf der Grundlage einer für jeden Batteriepack geschätzten Impedanz, eines für jeden Batteriepack maximal zulässigen Stroms und einer für jeden Batteriepack geschätzten Leerlaufspannung einen maximal zulässigen Strom des Batteriesystems dynamisch berechnet, wobei die Batterie-Management-Steuerung so ausgebildet ist, dass sie auf der Grundlage des berechneten maximal zulässigen Stroms des Batteriesystems die unidirektionalen Schaltelemente dynamisch steuert.

2. Das Batteriesystem nach Anspruch 1, wobei das unidirektionale Schaltelement (3) eine Reihenschaltung aus einem aktiv steuerbaren Schalter (4, 6) und einem unidirektionalen passiv gesteuerten Schalter (5, 7) aufweist.

3. Das Batteriesystem nach dem vorherigen Anspruch, wobei der unidirektionale passiv gesteuerte Schalter (5, 7) eine Diode, vorzugsweise eine ideale Diode, ist.

4. Das Batteriesystem nach einem der vorherigen Ansprüche, wobei das Paar unidirektionaler antiparallel geschalteter Schaltelemente (3) ein antiparallel geschaltetes Entladeschaltelement aufweist, welches so ausgerichtet ist, dass es das Entladen zulässt und das Laden des entsprechenden Batteriepacks sperrt, sowie ein Ladeschaltelement, das so ausgerichtet ist, dass es das Laden zulässt und das Entladen des entsprechenden Batteriepacks sperrt.

5. Das Batteriesystem nach dem vorherigen Anspruch 4, wobei die Steuerung, in einer ersten Betriebsart, so ausgebildet ist, dass sie alle Entladeschaltelemente einschaltet, das Ladeschaltelement des Batteriepacks mit der höchsten Spannung einschaltet und alle anderen Ladeschaltelemente ausschaltet; und/oder

   wobei die Steuerung, in einer zweiten Betriebsart, so ausgebildet ist, dass sie alle Ladeschaltelemente einschaltet, das Entladeschaltelement des Batteriepacks mit der niedrigsten Spannung einschaltet und alle anderen Entladeschaltelemente ausschaltet; und/oder
   wobei die Steuerung, in einer dritten Betriebsart, so ausgebildet ist, dass sie, wenn Spannungs- und Stromdifferenzen zwischen den Batteriepacks (2) in einem vorgegebenen Bereich liegen, alle Lade- und Entladeschaltelemente einschaltet.

6. Das Batteriesystem nach dem vorherigen Anspruch 5, wobei die Steuerung, in einer vierten Betriebsart, so ausgebildet ist, dass sie, wenn Spannungs- und Stromdifferenzen zwischen den Batteriepacks außerhalb eines vorgegebenen Bereichs liegen, zwischen der ersten und der zweiten Betriebsart dynamisch umschaltet, wobei vorzugsweise, vor dem Umschalten von einer Betriebsart in die andere, zunächst alle Schaltelemente ausgeschaltet werden und für jeden Batteriepack ein nicht angeschlossener Ruhezustand bestätigt wird.

7. Das Batteriesystem nach Anspruch 5 oder Anspruch 6, wobei die Steuerung so ausgebildet ist, dass sie gemäß zwei oder mehreren der folgenden Betriebsarten arbeitet: der ersten Betriebsart für ein maximales Entladen aller Batteriepacks an die externe Last, der zweiten Betriebsart für ein maximales Laden aller Batteriepacks von der externen Last und der dritten Betriebsart für eine maximale bidirektionale Übertragung zwischen den Batteriepacks und der externen Last.

8. Das Batteriesystem nach einem der obigen Ansprüche, wobei die Batterie-Management-Steuerung so ausgebildet ist, dass sie die Schaltelemente, auf der Grundlage eines oder mehr als einen weiteren Parameter des Batteriesystems und eines oder mehr als einen Parameter der externen Last (L), dynamisch steuert, wobei vorzugsweise der eine oder die mehr als einen weiteren Parameter des Batteriesystems einen oder mehr als einen Parameter für die Batteriepacks aufweisen, einschließlich einen oder mehrerer der folgenden Parameter: eine über einem Batteriepack gemessene Spannung, einen durch einen Batteriepack fließenden gemessenen Strom, einen abgeleiteten Ladezustand (SOC) eines Batteriepacks, und/oder wobei vorzugsweise der eine oder die mehr als einen Parameter der externen Last einen oder mehrere der folgenden Parameter aufweisen: eine Laststromanforderung, eine Drehmomentanforderung, eine Geschwindigkeitsanforderung.

9. Das Batteriesystem nach einem der obigen Ansprüche, wobei die Batterie-Management-Steuerung so ausgebildet ist, dass sie den maximal zulässigen Strom des Batteriesystems unter Verwendung der folgenden Formel dynamisch berechnet:

$$I_{\max\,total}(t) = sum \begin{cases} OCV_1(t) - U_{min}(t)) * Z_1(t) \\ (\vdots - \vdots) * \vdots \\ OCV_n(t) - U_{min}(t)) * Z_n(t) \end{cases}$$

wobei

$$U_{min}(t) = max \begin{cases} OCV_1(t) - Z_1(t)) * I_{1,max}(t) \\ (\vdots - \vdots) * \vdots \\ OCV_n(t) - Z_n(t)) * I_{n,max}(t) \end{cases}$$

wobei OCV, die geschätzte Leerlaufspannung eines Batteriepacks i ist, $Z_i$ die geschätzte Impedanz eines Batteriepacks i ist, $I_{i,max}$ der maximal zulässige Strom eines Batteriepacks i ist, für i=1 bis n, wobei n die Gesamtzahl der Batteriepacks ist, wobei vorzugsweise das Batteriesystem im Gebrauch unter Verwendung der obigen Formel ausgebildet ist, um den Hot-Swap von zumindest einem Batteriepack zu ermöglichen.

10. Ein Fahrzeug mit einem Batteriesystem nach einem der vorherigen Ansprüche, wobei das Fahrzeug vorzugsweise ein Auto, ein Motorroller, ein Motorrad, ein Trike oder ein Quad ist.

11. Ein Batterie-Management-Verfahren für ein Batteriesystem mit einer Mehrzahl an Batteriepacks nach Anspruch 1, wobei das Verfahren die folgenden Schritte aufweist:

   - Empfangen einer geschätzten Impedanz ($Z_i$ (t)) für jeden Batteriepack, eines maximal zulässigen Stroms ($I_{i,max}$) für jeden Batteriepack und einer geschätzten Leerlaufspannung ($OCV_i$ (t)) für jeden Batteriepack,
   - dynamisches Berechnen eines maximal zulässigen Stroms des Batteriesystems ($I_{max\,total}$ (t)) auf der Grundlage der empfangenen Informationen, und
   - Managen der Mehrzahl an Batteriepacks gemäß dem berechneten maximal zulässigen Strom des Batteriesystems ($I_{max\,total}$ (t)), wobei das Managen der Mehrzahl an Batteriepacks das dynamische Steuern der unidirektionalen Schaltelemente auf der Grundlage des berechneten maximal zulässigen Stroms des Batteriesystems umfasst.

12. Ein Batterie-Management-Verfahren nach dem vorherigen Anspruch, welches ferner das Berechnen der niedrigsten Spannung des Batteriesystems umfasst, bei der der am stärksten restriktive Batteriepack seinen maximal zulässigen Strom ($U_{min}$ (t)) erreicht.

13. Ein Batterie-Management-Verfahren nach einem der obigen Verfahrensansprüche, welches ferner den Schritt der Berechnung des maximal zulässigen Stroms des Batteriesystems unter Verwendung der folgenden Formel umfasst:

$$I_{\max\,total}(t) = sum \begin{cases} OCV_1(t) - U_{min}(t)) * Z_1(t) \\ (\vdots - \vdots) * \vdots \\ OCV_n(t) - U_{min}(t)) * Z_n(t) \end{cases}$$

wobei

$$U_{min}(t) = max \begin{cases} OCV_1(t) - Z_1(t)) * I_{1,max}(t) \\ (\vdots - \vdots) * \vdots \\ OCV_n(t) - Z_n(t)) * I_{n,max}(t) \end{cases}$$

wobei OCV, die geschätzte Leerlaufspannung eines Batteriepacks i ist, $Z_i$ die geschätzte Impedanz eines Batteriepacks i ist, $I_{i,max}$ der maximal zulässige Strom eines Batteriepacks i ist, für i=1 bis n, wobei n die Gesamtzahl der Batteriepacks ist.

14. Ein Datenspeichergerät, welches ein Programm in maschinenlesbarer und maschinenausführbarer Form kodiert, um einen oder mehrere Schritte eines der obigen Verfahrensansprüche durchzuführen.

15. Ein Computerprogramm mit computerausführbaren Anweisungen, um, wenn das Programm auf einem Computer ausgeführt wird, ein Verfahren gemäß jedem der Schritte eines der obigen Verfahrensansprüche durchzuführen.

## Revendications

1. Système de batterie (1) destiné à être connecté à une charge externe (L) comprenant :

   - une pluralité de blocs-batteries (2),
   - une pluralité d'éléments de commutation unidirectionnels (3), et
   - un dispositif de commande de gestion de batterie,
   - le système de batterie comprenant une pluralité de branches (8) connectées en parallèle les unes aux autres, chaque branche (8) comprenant un bloc-batterie (2) connecté en série à une paire d'éléments de commutation unidirectionnels (3) connectés en antiparallèle, **caractérisé en ce que** le dispositif de commande de gestion de batterie est configuré pour calculer dynamiquement un courant admissible maximal du système de batterie sur la base d'une impédance estimée pour chaque bloc-batterie, d'un courant admissible maximal pour chaque bloc-batterie et d'une tension de circuit ouvert estimée pour chaque bloc-batterie, et

   le dispositif de commande de gestion de batterie est configuré pour commander dynamiquement les éléments de commutation unidirectionnels sur la base du courant admissible maximal calculé du système de batterie.

2. Système de batterie selon la revendication 1, dans lequel l'élément de commutation unidirectionnel (3) comprend une combinaison en série d'un commutateur pouvant être activement commandé (4, 6) et d'un commutateur passivement commandé unidirectionnel (5, 7).

3. Système de batterie selon la revendication précédente, dans lequel le commutateur passivement commandé unidirectionnel (5, 7) est une diode, avec plus de préférence une diode idéale.

4. Système de batterie selon l'une quelconque des revendications précédentes, dans lequel la paire d'éléments de commutation unidirectionnels (3) en antiparallèle comprend, connectés en antiparallèle, un élément de commutation de décharge orienté pour permettre la décharge et bloquer la charge du bloc-batterie associé et un élément de commutation de charge orienté pour permettre la charge et bloquer la décharge du bloc-batterie associé.

5. Système de batterie selon la revendication 4, dans lequel le dispositif de commande est configuré dans un premier mode de fonctionnement pour activer tous les éléments de commutation de décharge, activer l'élément de commutation de charge du bloc-batterie présentant la tension la plus élevée et désactiver tous les autres éléments de commutation de charge ; et/ou

   dans lequel le dispositif de commandé est configuré dans un deuxième mode de fonctionnement pour activer tous les éléments de commutation de charge, activer l'élément de commutation de décharge du bloc-batterie présentant la tension la plus basse et désactiver tous les autres éléments de commutation de décharge ; et/ou
   dans lequel le dispositif de commandé est configuré dans un troisième mode de fonctionnement pour, si des différences de tension et de courant entre des blocs-batteries (2) se trouvent à l'intérieur d'une plage prédéterminée, activer tous les éléments de commutation de charge et de décharge.

6. Système de batterie selon la revendication 5, dans lequel le dispositif de commande est configuré dans un quatrième mode de fonctionnement pour, si des différences de tension et de courant entre des blocs-batteries se trouvent à l'extérieur d'une plage prédéterminée, commuter dynamiquement entre le premier mode de fonctionnement et le deuxième mode de fonctionnement, dans lequel, de préférence avant la commutation d'un mode à l'autre, tous les éléments de commutation sont d'abord désactivés et un état de veille déconnecté pour chaque bloc-batterie est confirmé.

7. Système de batterie selon la revendication 5 ou 6, dans lequel le dispositif de commande est configuré pour fonctionner selon deux ou plus des modes de fonctionnement suivants : le premier mode de fonctionnement pour une décharge maximale de tous les blocs-batteries à la charge externe, le deuxième mode de charge maximale de tous les blocs-batteries depuis la charge externe, et le troisième mode de transfert bidirectionnel maximal entre les blocs-batteries et la charge externe.

8. Système de batterie selon l'une quelconque des revendications précédentes, dans lequel le dispositif de commande de gestion de batterie est configuré pour commander dynamiquement les éléments de commutation sur la base d'un ou plusieurs autres paramètres du système de batterie et d'un ou plusieurs paramètres de la charge externe (L), dans lequel de préférence les un ou plusieurs autres paramètres du système de batterie comprennent un ou plusieurs paramètres pour les blocs-batteries, y compris un ou plusieurs de ce qui suit : une tension mesurée à travers un bloc-batterie, un courant mesuré s'écoulant à travers un bloc-batterie, un état de charge (SoC) dérivé d'un bloc-batterie, et/ou dans lequel de préférence les un ou plusieurs paramètres de la charge externe comportent un ou plusieurs de ce qui suit : une demande de courant de charge, une demande de couple, une demande de vitesse.

9. Système de batterie selon l'une quelconque des revendications précédentes, dans lequel le dispositif de commande de gestion de batterie est configuré pour calculer dynamiquement le courant admissible maximal du système de batterie en employant la formule suivante :

$$I_{\max total}(t) = somme \begin{cases} (OCV_1(t) - U_{min}(t)) * Z_1(t) \\ (\vdots - \vdots) * \vdots \\ (OCV_n(t) - U_{min}(t)) * Z_n(t) \end{cases}$$

avec

$$U_{min}(t) = max \begin{cases} OCV_1(t) - Z_1(t) * I_{1,max}(t) \\ \vdots - \vdots * \vdots \\ OCV_n(t) - Z_n(t) * I_{n,max}(t) \end{cases}$$

dans lequel $OCV_i$ est la tension de circuit ouvert estimée d'un bloc-batterie i, $Z_i$ est l'impédance estimée d'un bloc-batterie i, $I_{i,max}$ est le courant admissible maximal d'un bloc-batterie i, pour i=1 à n, avec n étant le nombre total de blocs-batteries, dans lequel de préférence le système de batterie est configuré en utilisation par l'emploi de ladite formule pour tenir compte du remplacement à chaud d'au moins un bloc-batterie.

10. Véhicule, comprenant un système de batterie selon l'une quelconque des revendications précédentes, dans lequel de préférence le véhicule est l'un parmi une voiture, un scooter motorisé, une motocyclette, un trike ou un quad.

11. Procédé de gestion de batterie pour un système de batterie d'une pluralité de blocs-batteries selon la revendication 1, dans lequel le procédé comprend les étapes consistant à :

- recevoir une impédance estimée ($Z_i(t)$) pour chaque bloc-batterie, d'un courant admissible maximal ($I_{i,max}$) pour chaque bloc-batterie, et une tension de circuit ouvert estimée ($OCV_i(t)$) pour chaque bloc-batterie,
- calculer dynamiquement un courant admissible maximal du système de batterie ($I_{max total}(t)$) sur la base des informations reçues, et
- gérer la pluralité de blocs-batteries selon le courant admissible maximal calculé du système de batterie ($I_{max total}(t)$), dans lequel la gestion de la pluralité de blocs-batteries comprend la commande dynamiquement des éléments de commutation unidirectionnels sur la base du courant admissible maximal calculé du système de batterie.

12. Procédé de gestion de batterie selon la revendication précédente, comprenant en outre le calcul de la tension la plus basse du système de batterie à laquelle le bloc-batterie le plus restrictif atteint son courant admissible maximal ($U_{min}(t)$).

13. Procédé de gestion de batterie selon l'une quelconque des revendications de procédé précédentes, comprenant en outre l'étape consistant à calculer le courant admissible maximal du système de batterie en employant la formule suivante :

$$I_{\max\,total}(t) = somme \begin{cases} (OCV_1(t) - U_{min}(t)) * Z_1(t) \\ (\vdots - \vdots) * \vdots \\ (OCV_n(t) - U_{min}(t)) * Z_n(t) \end{cases}$$

avec

$$U_{min}(t) = max \begin{cases} OCV_1(t) - Z_1(t) * I_{1,max}(t) \\ \vdots - \vdots * \vdots \\ OCV_n(t) - Z_n(t) * I_{n,max}(t) \end{cases}$$

dans lequel OCV; est la tension de circuit ouvert estimée d'un bloc-batterie i, $Z_i$ est l'impédance estimée d'un bloc-batterie i, $I_{i,max}$ est le courant admissible maximal d'un bloc-batterie i, pour i=1 à n, avec n étant le nombre total de blocs-batteries.

14. Dispositif de stockage de données codant un programme dans une forme lisible par machine et exécutable par machine pour réaliser une ou plusieurs étapes selon l'une quelconque des revendications de procédé précédentes.

15. Programme informatique comprenant des instructions exécutables par ordinateur pour réaliser un procédé, lorsque le programme est exécuté sur un ordinateur, selon l'une quelconque des revendications de procédé précédentes.

FIGURE 1

FIGURES 2a-2d

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009111478 A
- CN 107769280
- JP 4987581 B
- US 2013181681 A